# EUROPEAN PATENT APPLICATION

(11) **EP 2 772 857 A2**
(43) Date of publication of application: **03.09.2014**
(21) Application number: 13196233.4
(22) Date of filing: 09.12.2013
(51) Int. Cl.: G06F 9/50

(54) **Control device and resource control method**

(30) Priority: 27.02.2013 JP 2013037890
(71) Applicant: FUJITSU LIMITED, Kawasaki-shi, Kanagawa 211-8588 (JP)
(72) Inventor: Minakuchi, Yu, Kawasaki-shi, Kanagawa 211-8588 (JP); Ohashi, Masahiko, Osaka-shi, Osaka 540-0001 (JP); Endo, Tomotaka, Kawasaki-shi, Kanagawa 211-8588 (JP); Miwa, Mitsuhiko, Kawasaki-shi, Kanagawa 211-8588 (JP)
(74) Representative: Keltsch, Ulrike

(57) **Abstract**

A control device includes a collecting unit that collects load information representing load at execution of an application from an information processing device which executes the application, a determining unit that determines whether or not the load represented in the load information collected by the collecting unit exceeds a predetermined threshold value, a deciding unit that obtains an increase/decrease amount of the load at the execution of the application using the load information collected by the collecting unit and load information collected in past by the collecting unit, and decides an amount of resource to be allocated at the execution of the application based on the obtained increase/decrease amount, when the determining unit determines that the load exceeds the predetermined threshold value, and an allocation unit that allocates the amount of resource decided by the deciding unit to the application.

## Description

### FIELD

The embodiments discussed herein are related to a control device and a resource control method.

### BACKGROUND

Conventionally, there exists a technique in which a computer system such as a data center provides customers with computer resources. As an example of this technique, a well-known technique is provided for changing an amount of computer resources to be provided to the customers, in accordance with the load of the application executed by the customers.

For example, the computer system which provides the customers with the computer resource measures the load, such as an amount of memory used for the application executed by the customer, or CPU (Central Processing Unit) utilization at execution of the application. The computer system adds a preset amount of computer resource to the computer resource to be provided to the customer, when the measured load has exceeded a predetermined value.
Patent Document 1: Japanese Laid-open Patent Publication No. 2004-318474
Patent Document 2: Japanese Laid-open Patent Publication No. 2005-173928

However, a problem exists in the technique for changing the computer resource to be provided to the customer, using the above-described threshold value. That is, when a change suddenly occurs in the load of the application, the amount of computer resource to be provided does not follow the change in the load.

For example, when the load of the application exponentially increases, the addition made to the computer resource does not possibly follow the increase in the load of the application. As a result of this, a problem may occur in the execution of the application.

Accordingly, it is an object in one aspect of an embodiment of the invention to provide a control device and a resource control method that makes the computer resource follow the load of the application in a short time.

### SUMMARY

According to an aspect of an embodiment, a control device includes a collecting unit that collects load information representing load at execution of an application from an information processing device which executes the application, a determining unit that determines whether or not the load represented in the load information collected by the collecting unit exceeds a predetermined threshold value, a deciding unit that obtains an increase/decrease amount of the load at the execution of the application using the load information collected by the collecting unit and load information collected in past by the collecting unit, and decides an amount of resource to be allocated at the execution of the application based on the obtained increase/decrease amount, when the determining unit determines that the load exceeds the predetermined threshold value, and an allocation unit that allocates the amount of resource decided by the deciding unit to the application.

### BRIEF DESCRIPTION OF DRAWINGS

FIG. 1 is a diagram for explaining an information processing system according to a first embodiment;
FIG. 2 is a diagram illustrating a functional configuration of a service providing server;
FIG. 3 is a diagram for explaining an example of a free APL number table;
FIGS. 4A and 4B are diagrams for explaining an example of a memory management table;
FIG. 5 is a diagram for explaining an example of an address relation table;
FIG. 6 is a diagram for explaining an example of a service relation table;
FIG. 7 is a diagram for explaining an example of data measured by an APL load measuring unit;
FIG. 8 is a diagram for explaining an example of a change request;
FIG. 9 is a diagram for explaining a functional configuration of a resource allocation control server;
FIG. 10 is a diagram for explaining an example of a load condition table;
FIG. 11 is a diagram for explaining an example of threshold values;
FIG. 12 is a sequence diagram for explaining the flow of a process executed by the information processing system according to the first embodiment;
FIG. 13 is a diagram for explaining a functional configuration of a resource allocation control server according to a second embodiment;
FIG. 14 is a diagram for explaining a variation in the load condition table;
FIG. 15 is a sequence diagram for explaining the flow of a process executed by an information processing system according to the second embodiment;
FIG. 16 is a diagram for explaining a functional configuration of a service providing server according to a third embodiment;
FIG. 17 is a diagram for explaining an example of a service relation table according to the third embodiment;
FIG. 18 is a sequence diagram for explaining the flow of a process to be executed by an information processing system according to the third embodiment;
FIG. 19 is a diagram for explaining a variation in the service relation table according to the third embodiment;
FIG. 20 is a sequence diagram for explaining a variation of processes to be executed by the information processing system according to the third embodiment; and
FIG. 21 is a diagram for explaining a computer which executes a resource control program.

### DESCRIPTION OF EMBODIMENTS

Preferred embodiments of the present invention will be explained with reference to accompanying drawings.

Note that the embodiments are not to limit the technique of the disclosure. Each of the embodiments may adequately be formed in combination together without contradicting the scope thereof.

### [a] First Embodiment

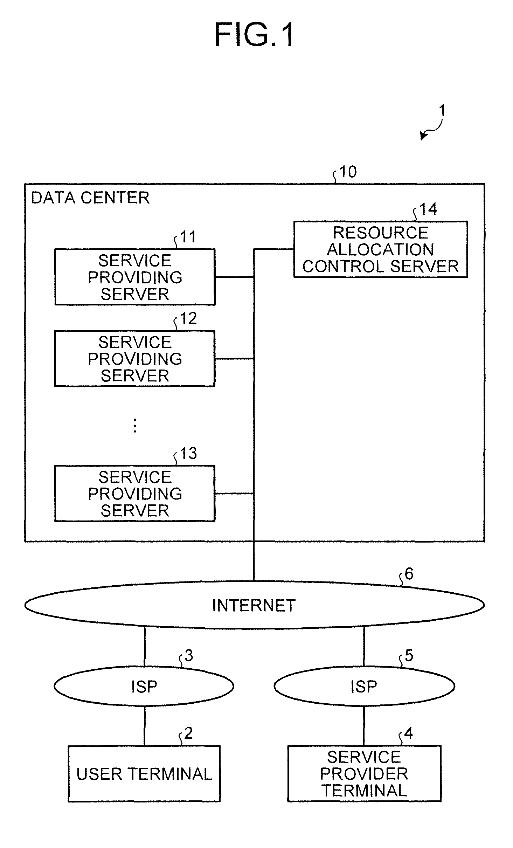

In a first embodiment, descriptions will be made to an information processing system 1 including a control server, according to the present application, using FIG. 1. FIG. 1 is a diagram for explaining an information processing system according to the first embodiment. In the example illustrated in FIG. 1, the information processing system 1 has a user terminal 2, an ISP (Internet Service Provider) 3, a service provider terminal 4, an ISP 5, the Internet 6, and a data center 10. The data center 10 has a plurality of service providing servers 11 to 13, and a resource allocation control server 14. In the example illustrated in FIG. 1, the user terminal 2 is connected to the data center 10 through the ISP 3 and the Internet 6. The service provider terminal 4 is connected to the data center 10 through the ISP 5 and the Internet 6.

The data center 10 has a plurality of service providing servers other than the service providing servers 11 to 13. The ISPs 3 and 5 are networks of an Internet provider providing a service for connecting the user terminal 2 or the service provider terminal 4 to the Internet 6. The service providing servers 12 and 13 have the same function as that of the service providing server 11, and thus will not be described below.

The user terminal 2 is a terminal which accepts a service executed by each of the service providing servers 11 to 13 included in the data center 10, through the ISP 3 and the Internet 6. The service provider terminal 4 is a terminal included in a source that provides a service to the user terminal 2.

For example, the service provider terminal 4 instructs the data center 10 to execute the application for providing various services to the user terminal 2. In this case, the data center 10 operates the application in response to the instruction, and provides the services to the user terminal 2.

The service providing servers 11 to 13 operate the application or a virtual machine, for providing various services to the user terminal 2. For example, the service providing servers 11 to 13 execute one application or more for providing services, in response to the instruction from the service provider terminal 4. The service providing server 11 provides an execution result of the application to the user terminal 2.

The service providing server 11 allocates an amount of resource set by the resource allocation control server 14 to each application, and executes it. In this case, the amount of resource implies an amount of resource to be used at the execution of the application, and may, for example, be an amount of memory allocated to the application, the number of applications to be executed, and the number of VM (Virtual Machine) executing the application.

The computer resource (that is, the load at the execution of the application) used by the service providing server 11 at the execution of the application changes in accordance with the contents provided by the application or the number of user terminals as targets to be provided with a service. However, even if a predetermined amount of resource is added when the load has just exceeded a predetermined threshold value, it is difficult to allocate the amount of resource in accordance with, for example, the load which has exponentially increased.

The resource allocation control server 14 predicts the amount of resource used for executing the application based on the increase/decrease amount of the load, and allocates the predicted amount of resource. In particular, the resource allocation control server 14 acquires the load at the execution of the application for each application executed by each of the service providing servers 11 to 13. The resource allocation control server 14 stores the acquired load.

The resource allocation control server 14 obtains the increase/decrease amount of the load at the execution of the application. The resource allocation control server 14 calculates the amount of resource to be allocated to the application based on the obtained increase/decrease amount of the load, and informs each of the service providing servers 11 to 13 about the obtained amount of resource, thereby adding or decreasing the amount of resource. As a result of this, the resource allocation control server 14 can allocate the amount of resource to the application in accordance with the load, also when, for example, the load at the execution of the application has exponentially increased.

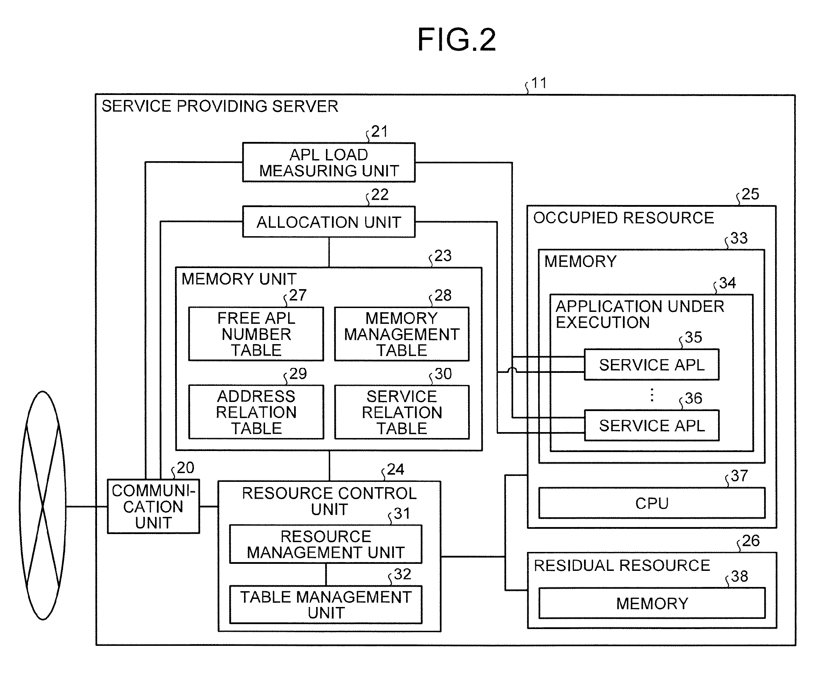

Descriptions will now be made to a functional configuration of the service providing server 11, using FIG. 2. FIG. 2 is a diagram for explaining a functional configuration of the service providing server. As illustrated in FIG. 2, the service providing server 11 has a communication unit 20, an APL (Application) load measuring unit 21, an allocation unit 22, a memory unit 23, a resource control unit 24, an occupied resource 25, and a residual resource 26. The memory unit 23 stores a free APL number table 27, a memory management table 28, an address relation table 29, and a service relation table 30.

The resource control unit 24 has a resource management unit 31 and a table management unit 32. The occupied resource 25 includes a memory 33 and a CPU (Central Processing Unit) 37. The memory 33 includes a plurality of service APLs 35 and 36, as an application 34 under execution. The residual resource 26 includes a memory 38. Though not illustrated in FIG. 2, the service providing server 11 executes various service APLs, other than the service APLs 35 and 36.

The occupied resource 25 is a computer resource being occupied for the service providing server 11 to execute the service APLs 35 and 36. For example, the memory 33 is a memory area which is allocated to the service APLs 35 and 36 as the occupied resource 25. The CPU 37 is an arithmetic processing unit which executes the service APLs 35 and 36. The residual resource 26 is a computer resource which is not allocated to the service APLs 35 and 36, of those computer resources included in the service providing server 11. For example, the memory 38 is a memory area which is not allocated to the service APLs 35 and 36, that is, a non-occupied memory area.

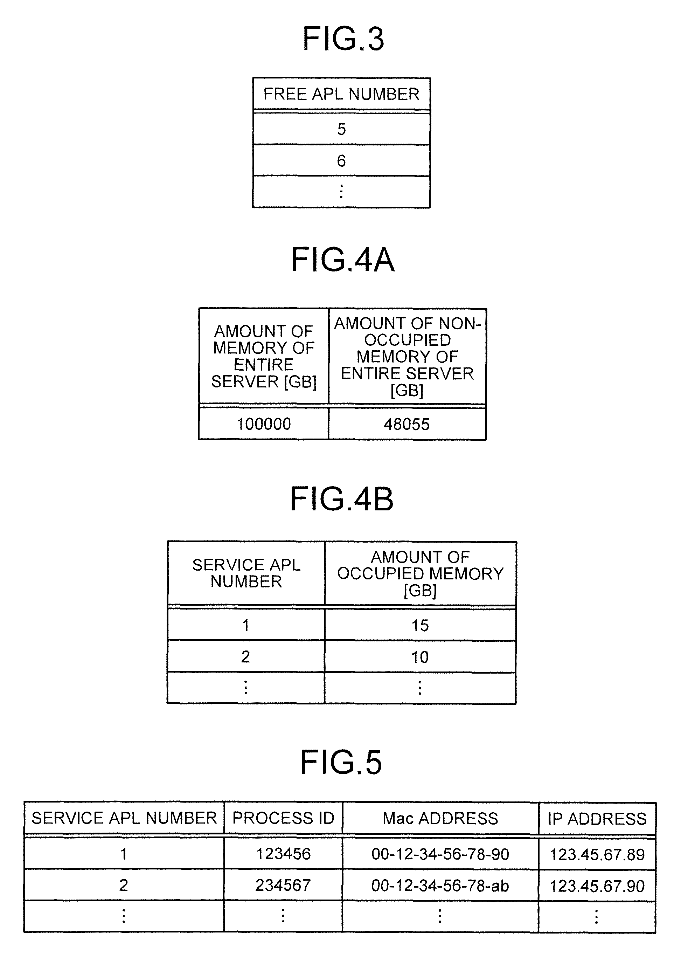

Descriptions will now be made to information contents stored in the tables 27 to 30 stored in the memory unit 23, using FIG. 3 to FIG. 6. Descriptions will be made to one example of the free APL number table, using FIG. 3. FIG. 3 is a diagram for explaining an example of the free APL number table. As illustrated in FIG. 3, the free APL number table stores APL numbers not allocated to one or more service APL executed by the service providing server 11.

That is, the service providing server 11 allocates an APL number to the service APL under execution, and keeps those APL numbers not allocated to the service APL under execution in the free APL number table 27. For example, in the example illustrated in FIG. 3, the free APL number table 27 keeps the APL numbers "5", "6", ...

Descriptions will now be made to an example of the memory management table 28, using FIGS. 4A and 4B. FIGS. 4A and 4B are diagrams for explaining an example of a memory management table. For example, the memory management table 28 stores information for the entire memory included in the service providing server 11, as illustrated in FIG. 4A, and stores the amount of memory allocated to each service APL executed by the service providing server 11, as illustrated in FIG. 4B.

For example, as illustrated in FIG. 4A, the memory management table 28 stores the amount of memory "100000 GB (gigabytes)" of the entire server, representing the entire amount of memory included in the service providing server 11. The memory management table 28 also stores the amount of non-occupied memory "48055 GB" of the entire server, representing the amount of non-occupied memory of the entire server.

As illustrated in FIG. 4B, the memory management table 28 stores service APL numbers given to the service APLs executed by the service providing server 11 and amounts of occupied memory, representing amounts of memory allocated to the service APLs, in association with each other. For example, the memory management table 28 indicates that a memory "15 GB" is allocated to the service APL with a service APL number "1", and that a memory "10 GB" is allocated to the service APL with a service APL number "2".

Descriptions will now be made to an example of the address relation table 29, using FIG. 5. FIG. 5 is a diagram for explaining an example of the address relation table. In the example illustrated in FIG. 5, the address relation table 29 stores service APL numbers, process IDs, MAC (Media Access Control) addresses, and IP (Internet Protocol) addresses, in association with each other. The process ID is an identifier allocated at activation of the service APL. For example, the CPU of the service providing server 11 specifies the service APL to be executed, using a process ID. The Mac addresses and the IP addresses are Mac addresses and IP address used when the user terminal 2 accesses the service APL for a service provided from the service APL.

For example, in the example illustrated in FIG. 5, the address relation table 29 indicates that a process ID "123456" is allocated to the service APL having the service APL number "1". The address relation table 29 indicates that the service APL with the service APL number "1" can be accessed using a Mac address "00-12-34-56-78-90" and an IP address "123.45.67.89".

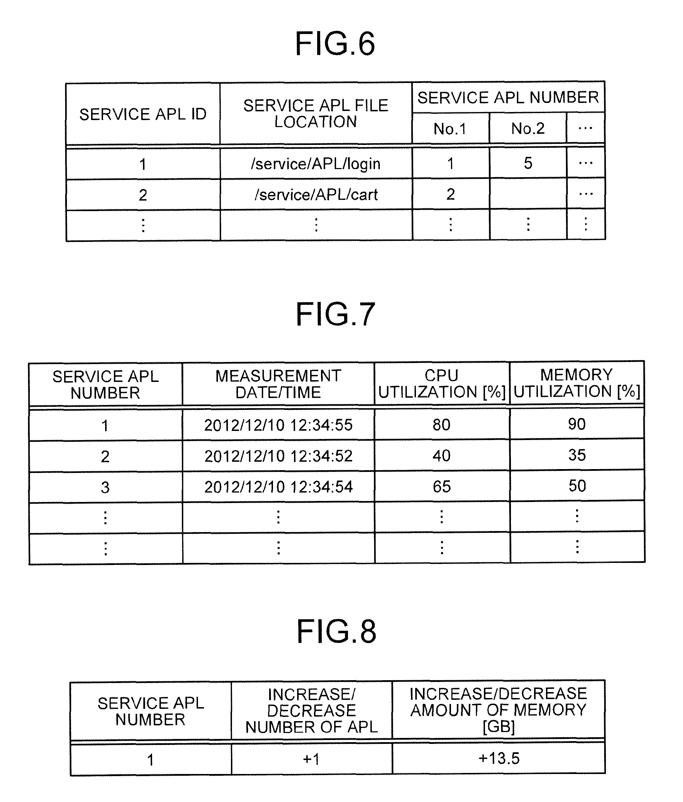

Descriptions will now be made to the service relation table 30, using FIG. 6. FIG. 6 is a diagram for explaining an example of the service relation table. In the example illustrated in FIG. 6, the service relation table 30 stores service APL IDs, service APL file locations, and service APL numbers, in association with each other. The service APL ID is an identifier identifying the kind of a service to be provided by the service providing server 11.

The service APL file location is information representing the location of a service APL for providing a service, and is, for example, an address at which the service APL is stored in a non-illustrative memory unit. As illustrated in FIG. 6, the service relation table 30 stores service APL numbers allocated to the service APLs operating for providing services indicated by the service APL IDs, together with numbers indicating the executed order.

For example, in the example illustrated in FIG. 6, the service relation table 30 indicates that a service APL for providing a service indicated by a service APL ID "1" is stored in "/service/APL/login". The service relation table 30 indicates that the service APL with the service APL number "1" and the service APL with the service APL number "5" are executed, for providing the service indicated by the service APL ID "1". The service APL with the service APL number "1" and the service APL with the service APL number "5" are service APLs that operate in cooperation together for providing the service indicated by the service APL ID "1".

In the example illustrated in FIG. 6, the service relation table 30 indicates that the service APL for providing the service indicated by the service APL ID "2" is stored in "/service/APL/cart". The service relation table 30 indicates that the service with the service APL number "2" is executed, for providing the service indicated by the service APL ID "2".

Back to FIG. 2, the communication unit 20 controls communication between the service providing server 11, the user terminal 2, the service provider terminal 4, and the resource allocation control server 14. The APL load measuring unit 21 measures the load at the execution of each of the service APLs 35 and 36 executed by the service providing server 11 at a predetermined time interval. The APL Load measuring unit 21 sends load information to the resource allocation control server 14.

Descriptions will now be made to one example of load measured by the APL load measuring unit 21, using FIG. 7. FIG. 7 is a diagram for explaining an example of data measured by the APL load measuring unit. For example, the APL load measuring unit 21 measures the CPU utilization and the memory utilization at the execution of each of the service APLs 35 and 36. In this case, the CPU utilization is information representing the percentage of the time in which the CPU 37 executes the processing of each of the service APLs 35 and 36. The memory utilization is information representing the percentage of the amount of memory which is actually used, of the amounts of memory allocated to the service APLs 35 and 36.

For example, the APL load measuring unit 21 measures the CPU utilization and the memory utilization by each of the service APLs 35 and 36. The APL load measuring unit 21 identifies the amounts of memory allocated to the service APLs 35 and 36. The APL load measuring unit 21 informs the service providing server 11 about load information including the measurement date/time (on/at which the load is measured), the service APL numbers of the service APLs, and the amounts of memory allocated to the service APLs, together with the measured CPU utilization and the memory utilization, in association with each other.

For example, as illustrated in FIG. 7, the APL load measuring unit 21 generates load information representing the service APL number "1", the measurement date/time "2012/12/10, 12:34:55", the CPU utilization "80%", and the memory utilization "90%", in association with each other. The APL load measuring unit 21 includes the memory usage of the service APL with the service APL number "1" in the generated load information, and sends the generated load information to the resource allocation control server 14 through the communication unit 20.

The APL load measuring unit 21 prepares the service APL number "2", the measurement date/time "2012/12/10, 12:34:52", the CPU utilization "40%", and the memory utilization "35%", in association with each other, and informs the resource allocation control server 14 of that. The APL load measuring unit 21 prepares the service APL number "3", the measurement date/time "2012/12/10, 12:34:54", the CPU utilization "65%", and the memory utilization "50%", in association with each other, and informs the resource allocation control server 14 of that.

Back to FIG. 2, the allocation unit 22 is a load balancer which allocates requests from the user terminal 2, using the address relation table 29 and the service relation table 30. For example, the allocation unit 22 receives a request for starting to provide the service indicated by the service APL ID "1".

In this case, the allocation unit 22 refers to the service relation table 30, and identifies that the service indicated by the service APL ID "1" is provided by the service APL with the service APL number "1" and the service APL with the service APL number "5". The allocation unit 22 selects the service APLs for providing services, to substantially equalize the number of user terminals as target terminals to provide services by the service APL with the service APL number "1" and the service APL with the service APL number "5".

When the service for the user terminal 2 starts to be provided, the allocation unit 22 controls sending/receiving of data generated between the selected service APLs and the user terminal 2, using the address relation table 29.

The resource control unit 24 controls the occupied resource 25 and the residual resource included in the service providing server 11. For example, the resource management unit 31 receives a change request for instructing to change the amounts of resources allocated to the service APLs 35 and 36, from the resource allocation control server 14 through the communication unit 20. Then, the resource management unit 31 changes the amounts of resources allocated to the service APLs 35 and 36, in response to the received change request. The resource management unit 31 informs the table management unit 32 of the changed contents.

For example, FIG. 8 is a diagram for explaining an example of the change request. As illustrated in FIG. 8, the change request is stored and includes the service APL number, the increase/decrease number of the APLs, and the increase/decrease amount of memory, in association with each other. For example, the resource management unit 31 additionally activates the same service APL as the service APL indicated by the service APL number "1", when the service APL number "1" corresponds to the APL increase/decrease number "+1", as the change request. The resource management unit 31 allocates the same amount of memory as the amount of memory allocated to the already-activated service APL, to the added service APL.

The resource management unit 31 adds an amount of memory "13.5 GB" allocated to the service APL indicated by the service APL number "1", when the service APL number "1" and the increase/decrease amount of memory "+13.5 GB" correspond to each other, as the change request.

For example, the resource management unit 31 ends one service APL which is the same as the service APL indicated by the service APL number "1", when the service APL number "1" and the increase/decrease number "-1" of the APL corresponds to each other. For example, the resource management unit 31 decreases the amount of memory allocated to the service APL indicated by the service APL number "1", by 13.5 GB, when the service APL number "1" and the increase/decrease amount of memory "-13.5 GB" correspond to each other.

When to add a service APL, the resource management unit 31 may determine whether there is enough free memory for the service APL to be added, and may activate the service APL after securing the free memory to be used for the service APL to be added. For example, when to add a service APL, the resource management unit 31 may send error information, or may request other service providing servers 12 and 13 for additional execution of the service APL, in a case where there is no free memory for the service APL to be added.

Back to FIG. 2, upon reception of the changed contents of the amounts of resource allocated to the service APLs 35 and 36 from the resource management unit 31, the table management unit 32 updates the tables 27 to 30 stored in the memory unit 23 based on the received changed contents.

For example, when one service APL to be executed by the resource management unit 31 is added, the table management unit 32 acquires one free APL number stored in the free APL number table 27, and allocates the acquired free APL number to the newly-added service APL. The table management unit 32 also deletes the acquired free APL number from the free APL number table 27.

The table management unit 32 stores the APL number allocated to the added service APL and the service APL ID representing the service provided by the added service APL in the service relation table 30, in association with each other. For example, the table management unit 32 adds the service APL for providing the service with the service APL ID "1", and executes the following processes, when a service APL number "5" is allocated to the added service APL. That is, the table management unit 32 extracts an entry with the service APL ID "1" from the service relation table 30, and adds the service APL number "5" to the service APL number of the extracted entry.

The table management unit 32 stores a service APL number, a process ID, a Mac address, and an IP address that are allocated to the added service APL, in the address relation table 29, in association with each other. The table management unit 32 acquires the process ID, the Mac address, and the IP address allocated to the added service APL, from the OS executed by the service providing server 11. The table management unit 32 stores the service APL number allocated to the added service APL and the amount of memory allocated to the added service APL in the memory management table 28.

When the service APL ends, the table management unit 32 deletes the service APL number allocated to the ended service APL from the service relation table 30. The table management unit 32 deletes the entry having the ended service APL number from the memory management table 28 and the address relation table 29. The table management unit 32 stores the service APL number allocated to the ended service APL in the free APL number table 27.

When addition or deletion is made to or from the amount of memory allocated to any service APL, the table management unit 32 updates the amount of memory stored in the memory management table 28. For example, when an amount of memory "13.5 GB" is added to the memory of the service APL number "1", the table management unit 32 adds an amount of memory "13.5 GB" to the memory stored in the memory management table 28 in association with the service APL number "1".

When addition or deletion is made to or from the service APL, or when addition or deletion is made to or from the amount of memory, the table management unit 32 sends the addition/deletion information of the service APL and the addition/deletion information of the amount of memory to the resource allocation control server 14.

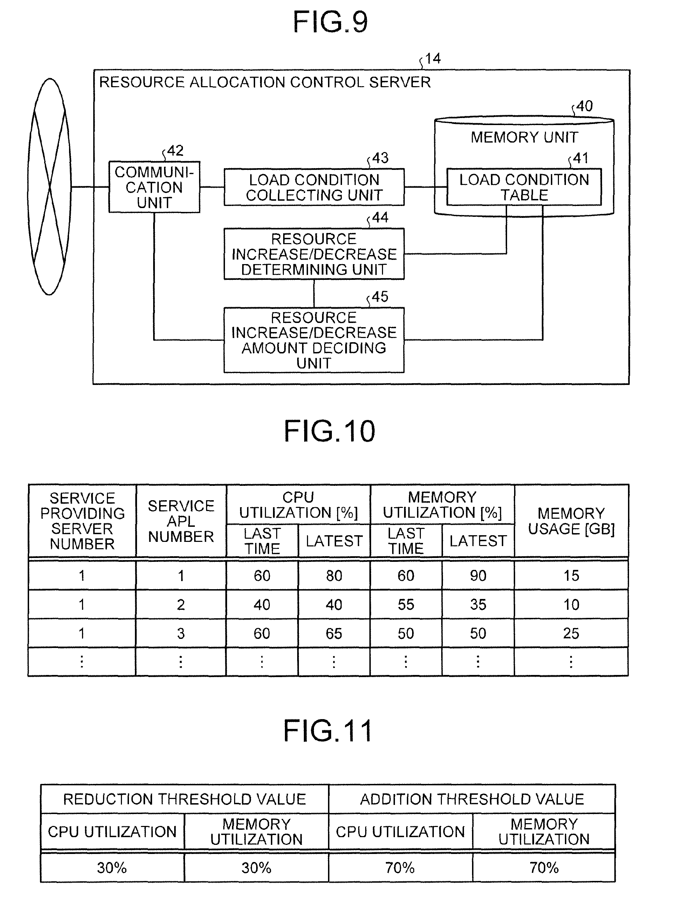

Descriptions will now be made to a functional configuration of a resource allocation control server, using FIG. 9. FIG. 9 is a diagram for explaining a functional configuration of the resource allocation control server. In the example of FIG. 9, the resource allocation control server 14 has a memory unit 40, a communication unit 42, a load condition collecting unit 43, a resource increase/decrease determining unit 44, and a resource increase/decrease amount deciding unit 45. The memory unit 40 stores a load condition table 41.

Descriptions will now be made to the load condition table 41 stored in the memory unit 40, using FIG. 10. FIG. 10 is a diagram for explaining an example of the load condition table. As illustrated in FIG. 10, each entry of the load condition table stores the service providing server number, the service APL number, the CPU utilization, the memory utilization, and the memory usage.

The service providing server number is a number for identifying each of the service providing servers 11 to 13, and is a number representing the service providing server which executes a service APL indicated by a corresponding service APL number. The load condition table 41 stores the last-time measured CPU utilization and the latest CPU utilization, and also the last-time measured memory utilization and the latest memory utilization.

Back to FIG. 9, the communication unit 42 controls communication between the resource allocation control server 14 and each of the service providing servers 11 to 13. The load condition collecting unit 43 collects load information from each of the service providing servers 11 to 13 through the communication unit 42. The load condition collecting unit 43 updates the load condition table 41 using the collected load information.

Descriptions will now be made to an example of a process executed by the load condition collecting unit 43. In the following descriptions, the service providing server number of the service providing server 11 is "1". For example, the load condition collecting unit 43 receives load information including the service APL number "1", the CPU utilization "80%", the memory utilization "90%", and the memory usage "15 GB", in association with each other.

In this case, the load condition collecting unit 43 extracts an entry having the service providing server number "1" and the service APL number "1", from the load condition table 41. The load condition collecting unit 43 deletes the last-time CPU utilization stored in the extracted entry, and sets the latest CPU utilization as the last-time CPU utilization. The load condition collecting unit 43 deletes the last-time memory utilization stored in the extracted entry, and sets the latest memory utilization as the last-time CPU utilization.

Subsequently, the load condition collecting unit 43 stores the CPU utilization "80%" of the load information received from the service providing server 11 in the extracted entry, as the latest CPU utilization. The load condition collecting unit 43 stores the memory utilization "90%" of the load information received from the service providing server 11 in the extracted entry, as the latest memory utilization. The load condition collecting unit 43 stores the memory usage "15 GB" received from the service providing server 11 in the extracted entry, as new memory usage.

The load condition collecting unit 43 receives the addition/deletion information of the service APL and the addition/deletion information of the memory usage from the service providing server 11. In this case, the load condition collecting unit 43 updates the load condition table 41 based on the addition/deletion information of the service APL and the addition/deletion information of the memory usage.

The resource increase/decrease determining unit 44 refers to the load condition table 41, and determines whether the load of each of the service APLs 35 and 36 has exceeded a threshold value. Specifically, a reduction threshold for determining whether to reduce the computer resource and an addition threshold value for determining whether to add the computer resource are set in the resource increase/decrease determining unit 44.

For example, when the load at the execution of the service APL 35 is lower than a reduction threshold value, the resource increase/decrease determining unit 44 instructs the resource increase/decrease amount deciding unit 45 to reduce the computer resource allocated to the service APL 35. When the load at the execution of the service APL 35 is greater than an addition threshold, the resource increase/decrease determining unit 44 instructs the resource increase/decrease amount deciding unit 45 to add the computer resource allocated to the service APL 35.

Descriptions will now be made to an example of a process executed by the resource increase/decrease determining unit 44. Descriptions will be made to an example of threshold values used by the resource increase/decrease determining unit 44, using FIG. 11. FIG. 11 is a diagram for explaining an example of threshold values. For example, the resource increase/decrease determining unit 44 stores a reduction threshold value for the CPU utilization and the memory utilization and also an addition threshold value for the CPU utilization and the memory utilization.

In the example illustrated in FIG. 11, the reduction threshold value for the CPU utilization is set to "30%", and the reduction threshold value for the memory utilization is set "30%", in the resource increase/decrease determining unit 44. The addition threshold value for the CPU utilization is set to "70%", and the addition threshold value for the memory utilization is set to 70%, in the resource increase/decrease determining unit 44.

For example, the resource increase/decrease determining unit 44 extracts an entry having the service providing server number "1" and the service APL number "1" from the load condition table 41, and compares the latest CPU utilization "80%" stored in the extracted entry with the reduction threshold value and the addition threshold value. Then, the resource increase/decrease determining unit 44 determines that the latest CPU utilization "80%" is equal to or greater than the addition threshold value "70%". In this case, the resource increase/decrease determining unit 44 instructs the resource increase/decrease amount deciding unit 45 to additionally activate the same service APL as the service APL indicated by the service APL number "1" of the service providing server number "1".

The resource increase/decrease determining unit 44 compares the latest memory utilization "90%" stored in the extracted entry with the reduction threshold value and the addition threshold value. Then, the resource increase/decrease determining unit 44 determines that the latest memory utilization "90%" is equal to or greater than the addition threshold value "70%". The resource increase/decrease determining unit 44 instructs the resource increase/decrease amount deciding unit 45 to add the memory usage to be allocated to the service APL indicated by the service APL number "1" with the service providing server number "1".

The resource increase/decrease determining unit 44 executes the following process, when the latest CPU utilization stored in the extracted entry is lower than the reduction threshold value. That is, the resource increase/decrease determining unit 44 instructs the resource increase/decrease amount deciding unit 45 to delete the service APL indicated by the service providing server number and the service APL number of the extracted entry.

The resource increase/decrease determining unit 44 executes the following process, when the latest memory utilization stored in the extracted entry is lower than the reduction threshold value. That is, the resource increase/decrease determining unit 44 instructs to reduce the memory usage allocated to the service APL indicated by the service providing server number and the service APL number of the extracted entry. The resource increase/decrease determining unit 44 executes the above-described process for each entry in the load condition table 41.

Back to FIG. 9, the resource increase/decrease amount deciding unit 45 obtains the increase/decrease amount of the load for each service APL, and determines the amount of computer resource to be allocated to each service APL, based on the calculated increase/decrease amount. The resource increase/decrease amount deciding unit 45 informs each of the service providing servers 11 to 13 about the determined amount of computer resource.

For example, the resource increase/decrease amount deciding unit 45 receives an instruction for additionally activating the same service APL as the service APL indicated by the service APL number "1" of the service providing server number "1", from the resource increase/decrease determining unit 44. In this case, the resource increase/decrease amount deciding unit 45 generates a change request including the service APL number "1" and the APL increase/decrease number "+1" in association with each other.

The resource increase/decrease amount deciding unit 45 receives an instruction for adding the memory usage to be allocated, for the service APL indicated by the service APL number "1" with the service providing server number "1". In this case, the resource increase/decrease amount deciding unit 45 extracts an entry having the service providing server number "1" and the service APL number "1", from the load condition table 41, and acquires the last-time memory utilization, the latest memory utilization, and the memory usage from the extracted entry.

The resource increase/decrease amount deciding unit 45 obtains a value as an increase/decrease amount of memory. This value is obtained by multiplying the memory usage and a predetermined coefficient (for example, "3") with a value obtained by deleting the last-time memory utilization from the latest memory utilization. For example, the resource increase/decrease amount deciding unit 45 obtains "30%" which is a value obtained by subtracting the last-time memory utilization "60%" from the latest memory utilization "90%", for the service APL indicated by the service APL number "1" of the service providing server number "1". The resource increase/decrease amount deciding unit 45 obtains an increase/decrease amount of memory "+13.5 GB" which has been obtained by multiplying the memory usage "15 GB" and the coefficient "3" with the obtained value "30%".

After this, the resource increase/decrease amount deciding unit 45 generates a change request representing the obtained increase/decrease amount of memory "+13.5 GB" and the service APL number "1" in association with each other. The resource increase/decrease amount deciding unit sends the generated change request to a service providing server with the service providing server number "1", that is, the service providing server 11, through the communication unit 42.

For example, when instructed to delete the service APL indicated by the service APL number "1" with the service providing server number "1", the resource increase/decrease amount deciding unit 45 generates a change request representing the service APL "1" and the APL increase/decrease number "-1", in association with each other. For example, when instructed to delete the memory usage indicated by the service APL number "1" with the service providing server number "1", the resource increase/decrease amount deciding unit 45 executes the following process.

That is, the resource increase/decrease amount deciding unit 45 obtains, as an increase/decrease amount of memory, a value obtained by multiplying the memory usage and a predetermined coefficient with a value which is obtained by subtracting the last-time memory utilization from the latest memory utilization. Thus, the resource increase/decrease amount deciding unit 45 obtains a negative value of an increase/decrease amount of memory, when the memory utilization with the service APL number "1" decreases. The resource increase/decrease amount deciding unit 45 generates a change request representing the obtained increase/decrease amount of memory and the service APL number in association with each other, and sends the generated change request to a corresponding service providing server.

Accordingly, the resource increase/decrease amount deciding unit 45 obtains an additional amount and reduction amount of the memory usage to be allocated to the service APLs 35 and 36, in accordance with the increase/decrease amount of the memory utilization. As a result, the resource allocation control server 14 can allocate an amount of computer resource to be allocated, even when the load of each service APL suddenly increases or decreases.

The coefficient used for obtaining the additional amount or reduction amount of the memory usage is a considered margin which is given to avoid depletion of the computer resource allocated to each service APL, until the time the resource allocation control server 14 obtains a new resource increase/decrease amount. That is, the resource increase/decrease amount deciding unit 45 may obtain an adequate additional amount or reduction amount of the memory usage without considering the coefficient, as long as a new resource increase/decrease amount can be obtained at a sufficiently short time interval, for the time the load changes at the execution of the service APL. An arbitrary value may be set as this coefficient, in accordance with the specifications of the service APL executed by the service providing servers 11 to 13 or the amount of the computer resource.

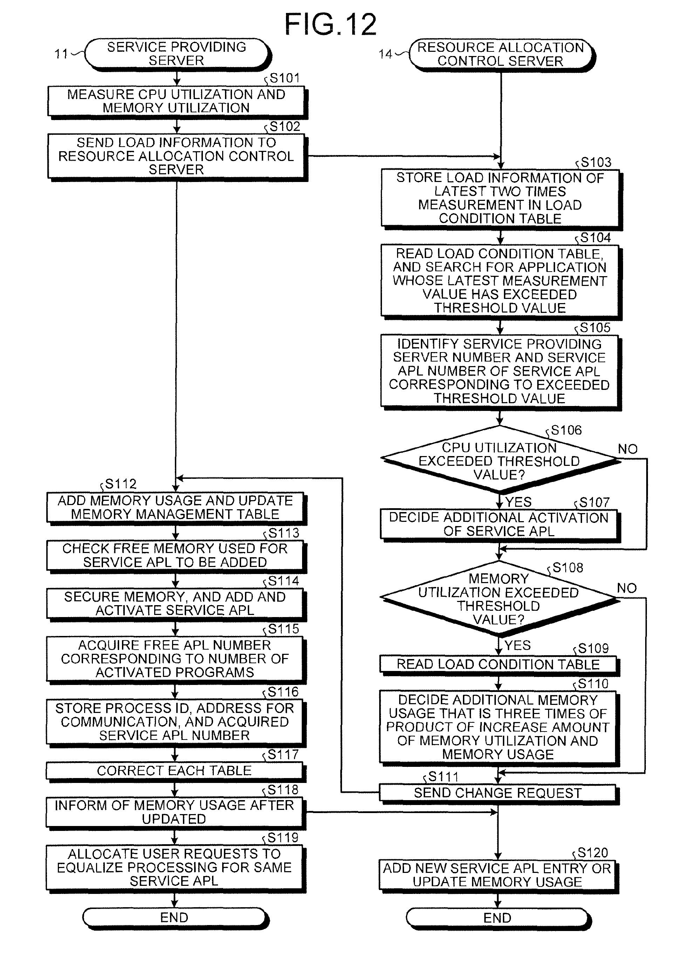

Descriptions will now be made to the flow of a process executed by the information processing system 1 according to the first embodiment, using FIG. 12. FIG. 12 is a sequence diagram for explaining the flow of the process executed by the information processing system according to the first embodiment. In the example of FIG. 12, for the sake of easy comprehension, the descriptions will be made to the flow of the process to be executed, when the CPU utilization or the memory utilization is equal to or greater than an addition threshold value.

For example, in the example of FIG. 12, the service providing server 11 measures the CPU utilization and the memory utilization (Step S101), and sends load information to the resource allocation control server 14 (Step S102). In this case, the resource allocation control server 14 stores the load information of the latest two times, in the load condition table 41 (Step S103).

Subsequently, the resource allocation control server 14 reads the load condition table 41, to search for the application whose latest measurement value has exceeded a threshold value, that is, a service APL whose latest measurement value is lower than a reduction threshold value or equal to or greater than the addition threshold value (Step S104). The resource allocation control server 14 identifies a service providing server number of the service APL and the service APL number, which have exceeded the threshold value (Step S105).

The resource allocation control server 14 determines whether the CPU utilization has exceeded the addition threshold value (Step S106). When the CPU utilization has exceeded the addition threshold value (Yes in Step S106), it decides the additional activation of the service APL (Step S107). The resource allocation control server 14 determines whether the memory utilization has exceeded the addition threshold value (Step S108). When the memory utilization has exceeded the addition threshold value (Yes in Step S108), the resource allocation control server 14 reads the load condition table 41 (Step S109).

The resource allocation control server 14 decides the additional memory usage that is three times the product of the increase amount of the memory utilization and the memory usage (Step S110). The resource allocation control server 14 sends a change request including the determination result to the service providing server 11 (Step S111). When the CPU utilization has not exceeded the threshold value (No in Step S106), the resource allocation control server 14 skips the procedure of Step S107. When the memory utilization has not exceeded the threshold value (No in Step S108), the resource allocation control server 14 skips Step S109 and Step S110.

Upon reception of the change request, the service providing server 11 adds the memory usage of the service APL, in response to the received change request, and updates the memory management table 28 (Step S112). Subsequently, the service providing server 11 checks the free memory to be used for an additional service APL (Step S113), secures the memory, and adds and activates the service APL (Step S114). The service providing server 11 acquires the APL numbers corresponding to the number of activated programs, from the free APL number table (Step S115).

The service providing server 11 stores the process ID, the address for communication (that is, the Mac address, the IP address), and the acquired service APL number in the address relation table 29 (Step S116). The service providing server 11 updates the free APL number table 27, the memory management table 28, and the service relation table 30 (Step S117), and informs the resource allocation control server 14 about the memory usage after updated (Step S118).

After this, the service providing server 11 allocates user requests, to equalize the processes performed between the service APLs for providing the same service (Step S119). The resource allocation control server 14 adds a new entry into the load condition table 41, or updates the memory usage in the load condition table 41, in accordance with the memory usage after updated (Step S120).

### Effect of Resource Allocation Control Server 14

As described above, the resource allocation control server 14 collects load information representing the load at the execution of the service APLs 35 and 36. The resource allocation control server 14 determines whether the collected load has exceeded a predetermined threshold value. When the collected load has exceeded the predetermined threshold value, the resource allocation control server 14 obtains the increase/decrease amount of the load, using the collected load and the collected load in the past, and determines the amount of computer resource to be allocated to the service APL based on the obtained increase/decrease amount. After this, the resource allocation control server 14 instructs each of the service providing servers 11 to 13 to allocate the determined amount of computer resource.

Accordingly, the resource allocation control server 14 can allocate the amount of computer resource which has been obtained based on the increase/decrease amount of the load, to each of the service APLs 35 and 36. For example, even when the load at the execution of the service APLs 35 and 36 exponentially increases, the resource allocation control server 14 can allocate the amount of computer resource to be allocated to the service APLs 35 and 36 in accordance with the load. Because the resource allocation control server 14 can allocate the amount of computer resource in accordance with the load, it is possible to avoid a negative effect, such as a process delay, for example, due to congestion.

The resource allocation control server 14 collects the memory utilization at the execution of the service APL 35. The resource allocation control server 14 obtains a value by multiplying the memory usage allocated to the service APL 35 and a predetermined coefficient with a value obtained by subtracting the last-time collected memory utilization from the latest memory utilization. After this, the resource allocation control server 14 adds the obtained value to the memory usage allocated to the service APL 35.

That is, the resource allocation control server 14 adds the memory usage allocated to the service APL 35, based on the increase amount of the memory utilization at the execution of the service APL 35. Thus, even when the memory usage used by the service APL 35 suddenly increases, the resource allocation control server 14 can allocate the memory usage to the service APL 35.

Because the memory usage is added in consideration of a predetermined coefficient, the resource allocation control server 14 can include a margin until the resource allocation control server 14 adds the memory usage for the next time, into the memory usage to be added. As a result of this, the resource allocation control server 14 can prevent the defect that the service APL 35 stops, due to the shortage of the memory usage for the service APL 35.

### [b] Second Embodiment

The above-described resource allocation control server 14 determines the amount of computer resource to be allocated to the service APLs 35 and 36, using the load information by the latest two times measurement. However, the preferred embodiments are not limited to the above. For example, the resource allocation control server 14 may determine the amount of computer resource to be allocated to the service APLs 35 and 36, using the load information by plural times measurement.

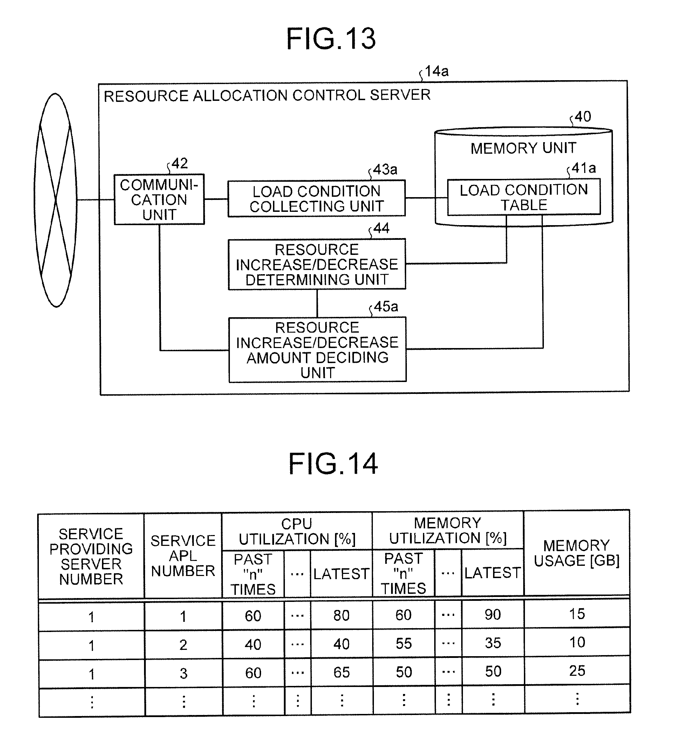

Descriptions will now be made to the resource allocation control server 14a which determines an amount of computer resource to be allocated to the service APLs 35 and 36, using load information obtained by plural times measurement. For example, FIG. 13 is a diagram for explaining a functional configuration of a resource allocation control server according to a second embodiment. In the functional configuration of the resource allocation control server 14a illustrated in FIG. 13, those having the same function as that of the functional configuration of the resource allocation control server 14 of FIG. 9 are identified by the same reference numerals, and thus will not be described again.

In the example illustrated in FIG. 13, the resource allocation control server 14a has a load condition collecting unit 43a and a resource increase/decrease amount deciding unit 45a. The memory unit 40 stores a load condition table 41a. Descriptions will now be made to the load condition table 41a stored in the memory unit 40, using FIG. 14.

FIG. 14 is a diagram for explaining a variation in the load condition table. As illustrated in FIG. 14, like the load condition table 41, the load condition table 41a stores service providing server numbers, service APL numbers, CPU utilization, and memory usages, in association with each other. The load condition table 41a stores the CPU utilization and the memory utilization stored in the load information for the past "n" times, as the CPU utilization. That is, the load condition table 41a stores the load which has been measured in the past for the plural times, for each service APL.

Back to FIG. 13, the load condition collecting unit 43a has the same function as that of the load condition collecting unit 43 illustrated in FIG. 9. Further, the load condition collecting unit 43a stores not only the CPU utilization and the memory utilization by the latest two times measurement, but also the CPU utilization and the memory utilization for the past "n" times, in the load condition table 41a. For example, upon reception of new load information, the load condition collecting unit 43a deletes the CPU utilization and the memory utilization which are measured before "n" times, and stores newly-measured CPU utilization and memory utilization in the load condition table 41a.

The resource increase/decrease amount deciding unit 45a has the same function as that of the resource increase/decrease amount deciding unit 45 illustrated in FIG. 9. In this case, the resource increase/decrease amount deciding unit 45a obtains the memory usage, using the memory utilization by the measurement of the past "n" times. For example, the resource increase/decrease amount deciding unit 45a extracts the memory utilization having the lowest value, of the memory utilization of the past "n" times. The resource increase/decrease amount deciding unit 45a subtracts the extracted memory utilization from the latest memory utilization, and sets a value obtained by multiplying the memory usage and a predetermined coefficient (for example, "3") with the subtracted value, as a memory usage to be added.

Accordingly, the resource allocation control server 14a obtains the memory usage to be added, based on a difference between the lowest memory utilization and the latest memory utilization, of the memory utilization by the measurement of the past "n" times. Thus, the resource allocation control server 14a can add the memory usage beforehand, for example, when the amount of memory to be used for the service APL 35 remarkably increases.

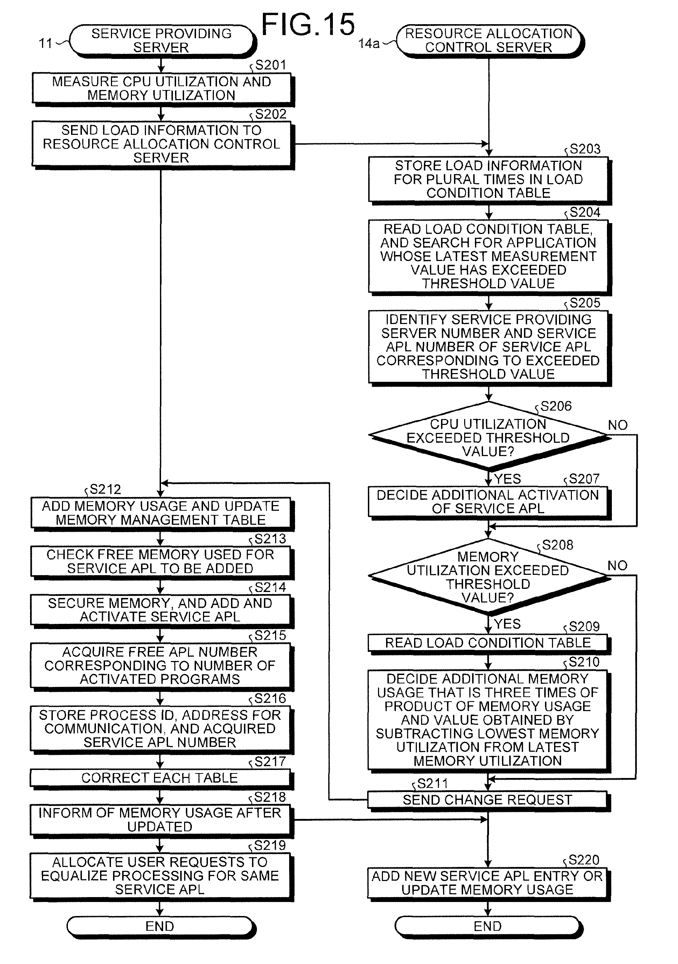

Descriptions will now be made to the flow of a process to be executed by the information processing system according to the second embodiment, using FIG. 15. FIG. 15 is a sequence diagram for explaining the flow of a process executed by the information processing system according to the second embodiment. In the process illustrated in FIG. 15, Steps S201, S202, S204 to S209, and S211 to S220 are the same procedures as Steps S101, S102, S104 to S109, and S111 to S120 illustrated in FIG. 12, and thus will not be described again.

For example, upon reception of the load information from the service providing server 11, the resource allocation control server 14a stores load information for the plural times in the load condition table 41a (Step S203). The resource allocation control server 14a sets a value obtained by multiplying the memory usage and the coefficient "3" with a value obtained by subtracting the lowest memory utilization from the latest memory utilization, as a memory usage to be added, for a particular service APL (step S210).

### Effect of Resource Allocation Control Server 14a

As described above, the resource allocation control server 14a sets a value obtained by multiplying the memory usage and a predetermined coefficient with a value obtained by subtracting the lowest memory utilization, of the memory utilization rates collected in the past, from the latest memory utilization, as a memory usage to be added. Thus, the resource allocation control server 14a can add the memory usage beforehand, when the amount of memory to be used for the service APL remarkably increases.

### [c] Third Embodiment

The above-described service providing server 11 increases or decreases only the memory usage of the application indicated by the service APL number stored in the received change request. However, the embodiments are not limited to the above. For example, the service providing server 11 may increase or decrease the memory usage to be allocated to another service APL for providing the same service, when the memory usage to be allocated to the service APL is increased or decreased.

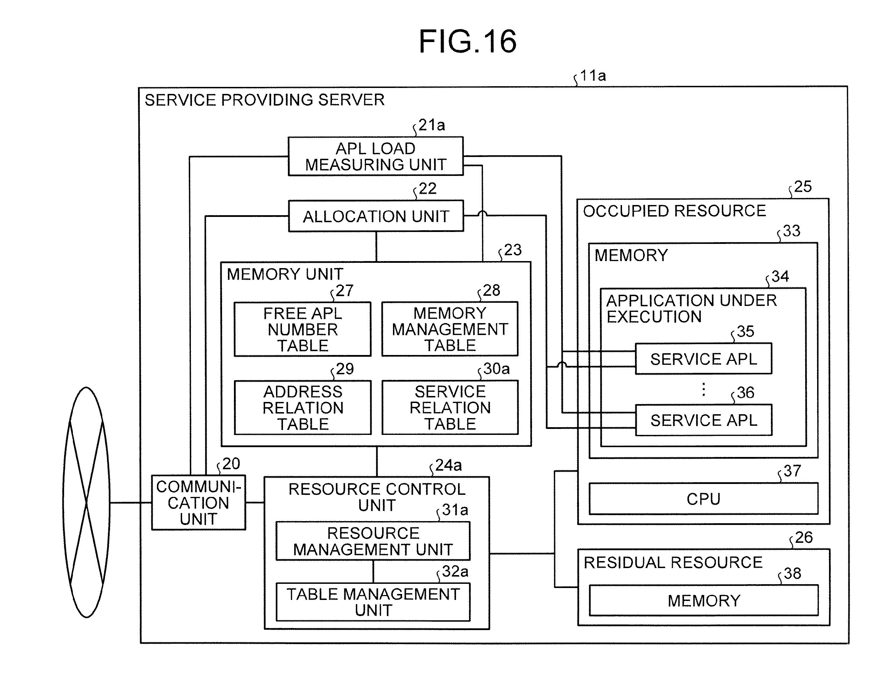

Descriptions will now be made to a service providing server 11a which increases the memory usage to be allocated to another service APL, when the memory usage of the main service APL is increased, at the execution of a plurality of service APLs for providing the same service. Descriptions will now be made to a functional configuration of the service providing server 11a using FIG. 16.

FIG. 16 is a diagram for explaining the functional configuration of the service providing server according to a third embodiment. In the functional configuration of the service providing server 11a illustrated in FIG. 16, those having the same function as that of the functional configuration of the service providing server 11 illustrated in FIG. 2 are identified by the same reference numeral, and thus will not be explained again. In the example of FIG. 16, the service providing server 11a has a resource control unit 24a. The resource control unit 24a has an APL load measuring unit 21a, a resource management unit 31a, and a table management unit 32a. A memory unit 23 of the service providing server 11a has a service relation table 30a.

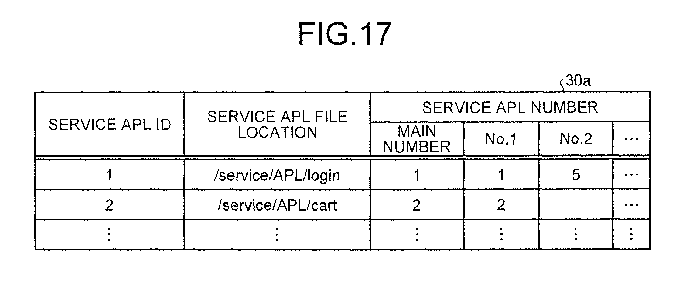

Descriptions will now be made to an example of information stored in the service relation table 30a, using FIG. 17. FIG. 17 is a diagram for explaining an example of the service relation table according to the third embodiment. As illustrated in FIG. 17, like the service relation table illustrated in FIG. 6, the service relation table 30a stores service APL IDs, service APL file location, and service APL numbers, in association with each other.

The service relation table 30a stores the main number together with the service APL number of the service APL for providing the service indicated by each service APL ID. In this case, the main number is a service APL number representing a service APL set as the main service APL, of service APLs for providing a particular service.

Back to FIG. 16, the APL load measuring unit 21a has the same function as that of the APL load measuring unit 21 illustrated in FIG. 2. In this case, the APL load measuring unit 21a measures the load at the execution of the main service APL, of the service APLs 35 and 36. For example, the APL load measuring unit 21a refers to the service relation table 30a stored in the memory unit 23, and identifies a service APL having the main number as the service APL number (that is, the main service APL). Then, the APL load measuring unit 21a measures the load at the execution of the main service APL, and sends the measurement result to the resource allocation control server 14 as load information.

The resource management unit 31a has the same function as the resource management unit 31 illustrated in FIG. 2. Upon reception of a change request including an increase amount of memory, the resource management unit 31a executes the following process. For example, the resource management unit 31a extracts one or more entry having the service APL number stored in the change request as the main number, from the service relation table 30a.

To the resource allocation control server 14, only load information according to the main service APL is sent. Thus, a service APL number of the main service APL is stored in the change request to be sent from the resource allocation control server 14 to the service providing server 11a.

The resource management unit 31a determines whether any number other than the main number is stored in the extracted entry, as a service APL number. That is, the resource management unit 31a determines whether another service APL for providing the same service as the main service APL is being executed.

When any number other than the main number is stored in the extracted entry as a service APL number, the resource management unit 31a multiplies the number of the entire service APL numbers stored in the extracted entry and the increase amount of memory stored in the change request. That is, the resource management unit 31a obtains the total memory usage which will be added to the service APLs indicated by the entire service APL numbers stored in the extracted entry.

The resource management unit 31a refers to a free memory, and determines whether the total memory usage can be secured. When the total memory usage can be secured, the resource management unit 31a executes the following process. That is, the resource management unit 31a identifies the service APLs indicated by the service APL numbers stored in the extracted entry, and adds an increase amount of memory which is stored in the change request to the memory usage allocated to the entire identified service APLs.

That is, when the load of the main service APL increases, the resource management unit 31a adds the memory usage to be allocated also to another service APL for providing the same service as the main service APL. For example, when an addition is made to the memory usage allocated to the service APL with the service APL number "1", the resource management unit 31a adds the same memory amount to the service APL indicated by the service APL number "5".

When the increase amount of the memory stored in the change request is a negative value, namely, when a reduction amount of memory is stored, the resource management unit 31a reduces the memory usage allocated to a plurality of service APLs for providing the same service as the main service APL.

When an increase number of APLs is stored in the change request, the resource management unit 31a extracts an entry having the service APL number stored in the change request as the main number, from the service relation table 30a. The resource management unit 31a checks the free memory to secure a required amount of memory at additional activation of a set of service APLs indicated by the service APL number stored in the extracted entry. When memory allocation is possible, the resource management unit 31a additionally executes the set of APLs indicated by the service APL number stored in the extracted entry, for the increase number of the APLs.

For example, when the change request includes a service APL number "1" and an increase number of APLs "1", the resource management unit 31a additionally executes the service APL indicated by the service APL number "1" and the service APL indicated by the service APL number "5". When a reduction number of APL is stored in the change request, the resource management unit 31a stops the same number of service APLs as the stored reduction number of the APLs.

The table management unit 32a has the same function as the table management unit 32 illustrated in FIG. 2. When a service APL for executing a new service is executed, the table management unit 32a creates a new entry in the service relation table 30a, and stores a service APL ID and a service APL file location in the created entry. The table management unit 32a stores the service APL number of the newly-executed service APL in the added entry, as the main number.

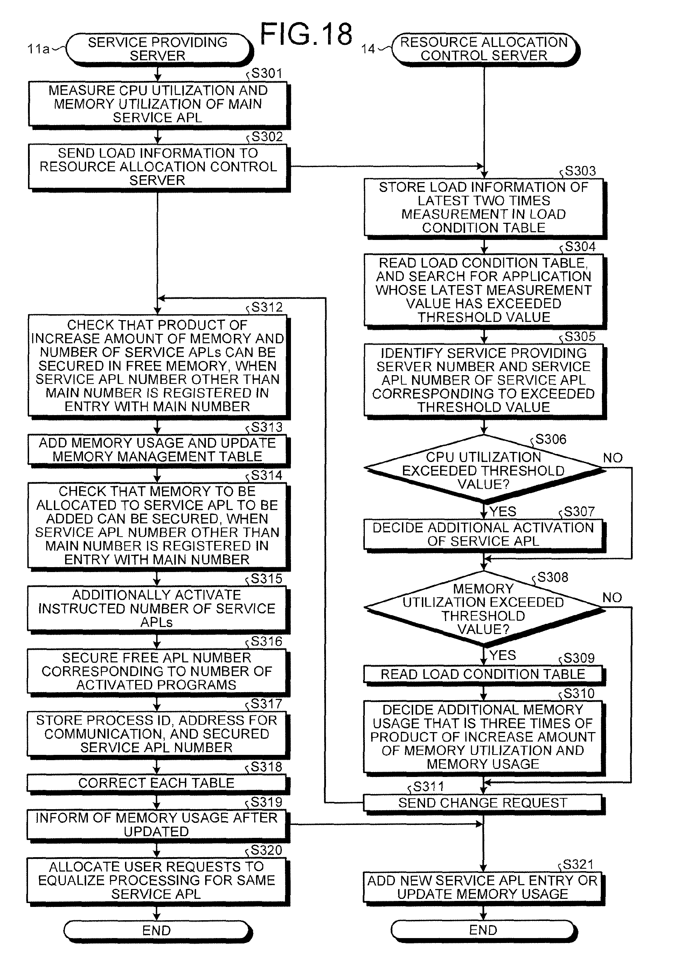

Descriptions will now be made to the flow of a process executed by an information processing system according to the third embodiment, using FIG. 18. FIG. 18 is a sequence diagram for explaining the flow of a process executed by the information processing system according to the third embodiment. In the process illustrated in FIG. 18, S302 to S311 and S316 to S321 are the same procedures as Steps S102 to S111 and S115 to S120 illustrated in FIG. 12, and thus will not be explained again. In the descriptions with the example illustrated in FIG. 18, when a service APL for providing a particular service is executed for a plurality of times, the service APL for providing the same service is additionally executed, and the memory usage to be allocated to the service APL is added.

The service providing server 11a measures the CPU utilization and the memory utilization, for the main service APL (Step S301). When a service APL number other than the main number is registered in the entry having the service APL number stored in the received change request, as the main number, the service providing server 11a executes the following process.

That is, the service providing server 11a checks whether it is possible to secure the produce of the increase amount of memory and the number of service APLs (that is, the total memory usage which will be added), in the free memory (Step S312). The service providing server 11a adds the memory usages of the service APLs indicated by the service APL number stored in the extracted entry, and updates the memory management table 28 (Step S313).

When any service APL number other than the main number is registered in the entry with the main number, the service providing server 11a checks whether it is possible to secure a sufficient memory to be allocated to the set of APLs to be added (Step S314). That is, the service providing server 11a checks whether it is possible to secure enough memory necessary for activating the set of plural service APLs for providing one service, in cooperation with the service APL having the main number. The service providing server 11a adds and activates an instructed number of service APLs (Step S315).

### Effect of Service Providing Server 11a

As described above, the service providing server 11a measures the memory utilization by the main service APL, of a plurality of service APLs for providing the same service. When an addition is made to the memory usage for the main service APL, the service providing server 11a also adds the memory usage of another service APL for providing the same service.

That is, if the load at the execution of one service APL increases, of a plurality of service APLs operating in cooperation for providing the same service, it can be considered that the load at the execution of another service APL increases as well. Therefore, the service providing server 11a measures the load at the execution of the main service APL, of the plurality of service APLs for providing the same service.

When an addition is made to the computer resource allocated to the main service APL, the service providing server 11a adds the computer resource allocated to another service APL as well. As a result, the service providing server 11a can allocate the computer resource to the service APLs in accordance with the load, without measuring the load for the plurality of service APLs for providing the same service.

### [d] Fourth Embodiment

The descriptions have so far been made to the preferred embodiments of the present invention. However, the embodiments may be applied in various forms other than the above forms. Now, descriptions will be made to another embodiment included in the present invention, as a fourth embodiment.

### (1) Variation of Service Providing Server 11a

When an addition is made to the memory usage for the main service APL, the above-described service providing server 11a also adds the memory usage of another service APL for providing the same service. However, the embodiments are not limited to the above. For example, the service providing server 11a may set an amount of change (addition or reduction) in the memory, in association with each service APL.

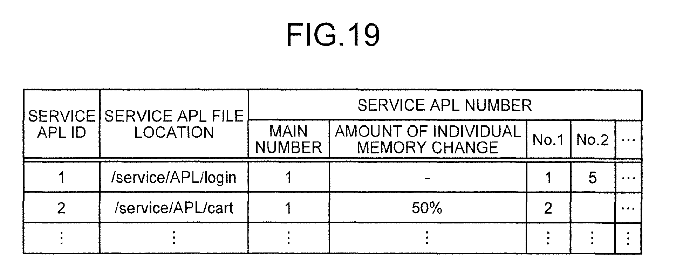

For example, FIG. 19 is a diagram for explaining a variation in the service relation table according to the third embodiment. In the example of FIG. 19, the service relation table 30a stores amounts of individual memory change, in addition to the information illustrated in FIG. 17. For example, in the example illustrated in FIG. 19, the service relation table 30a stores a service APL ID "2", together with a main number "1", an amount of individual memory change "50%", and a service APL number "2", in association with each other.

That is, in the example of FIG. 19, when an addition is made to a memory usage for a service APL with the service APL number "1", the service relation table 30 indicates that an addition is made to the memory usage for a service APL with the service APL number "2". The service relation table 30a indicates that the to-be-added memory usage for the service APL with the service APL number "2" is "50%" of the to-be-added memory usage for the service APL with the service APL number "1".

When the information indicated in FIG. 19 is stored in the service relation table 30a, the resource management unit 31a executes the following process. Like the third embodiment, the resource management unit 31a extracts an entry with the service APL number stored in the change request as the main number, from the service relation table 30a.

When the main number and any number other than the main number are stored as service APL numbers in the extracted entry, the resource management unit 31a multiplies the number of the entire service APL numbers stored in the extracted entry and the increase amount of memory stored in the change request. That is, the resource management unit 31a obtains the total amount of memory usage to be added for the service APLs with the entire service APL numbers stored in the extracted entry.

When the number other than the main number is stored as the service APL number in the extracted entry, the resource management unit 31a identifies the amount of individual memory change stored in the extracted entry. The resource management unit 31a multiplies the identified amount of individual memory change and the increase amount of memory stored in the change request, and adds the multiplied value to the total memory usage. Then, the resource management unit 31a refers to the free memory, and determines whether the total memory usage can be secured. When the total memory usage can be secured, the unit adds the computer resource.

That is, the resource management unit 31a identifies a service APL indicated by each service APL number stored in an entry in which the main number and any number other than the main number are stored as the service APL numbers. The resource management unit 31a adds the increase amount of memory stored in the change request, to the memory usage allocated to all the identified service APLs.

The resource management unit 31a identifies a service APL indicated by each service APL number stored in an entry in which any number other than the main number is stored as the service APL number. The resource management unit 31a adds the product of the increase amount of memory stored in the change request and the amount of individual memory change, to the memory usage allocated to all the service APLs.

For example, upon reception of a change request in which the service APL number "1" and an increase amount of memory "10 GB" are stored, the resource management unit 31a executes the following process. The resource management unit 31a adds the memory usage of "10 GB" allocated to the service APL indicated by the service APL number "1" and the service APL Indicated by the service APL number "5". The resource management unit 31a adds the memory usage of "5 GB" to be allocated to the service APL indicated by the service APL number "2".

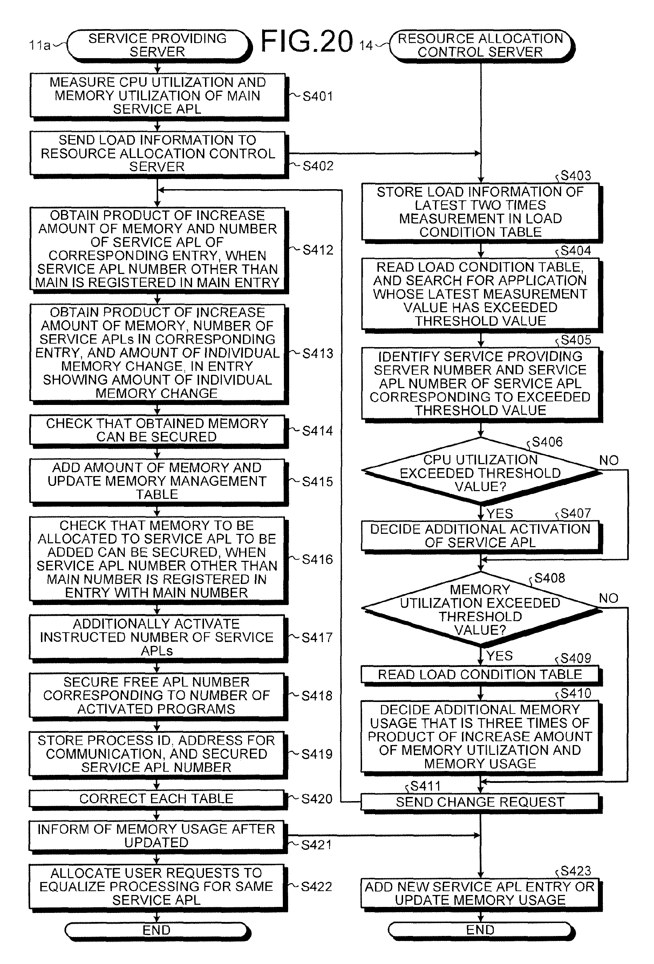

Descriptions will now be made to a variation of the process executed by the information processing system according to the third embodiment, using FIG. 20. FIG. 20 is a sequence diagram for explaining the variation of the process executed by the information processing system according to the third embodiment. In the process illustrated in FIG. 20, S401 to S411 and S416 to S423 are the same as Step S301 to S311 and S314 to S321 illustrated in FIG. 18, and thus will not be explained again.

For example, the service providing server 11a extracts an entry including the service APL number stored in the change request as the main number. When the extracted entry has the main number and a service APL number other than the main number are stored as the service APL numbers, the service providing server 11a obtains the product of the increase amount of memory and the number of service APLs included in the entry (Step S412). When the main number is not stored as the service APL number in the extracted entry, the service providing server 11a obtains the product of the increase amount of memory, the number of service APLs registered in the entry, and the amount of individual memory change (Step S413).

The service providing server 11a checks whether it is possible to secure a sufficient memory corresponding to the values obtained in Step S412 and Step S413 (Step S414). The service providing server 11a adds a memory to be allocated to the service APL indicated by the service APL number registered in the extracted entry, and updates the memory management table 28 (Step S415).

Specifically, when the main number and the service APL number other than the main number are stored as the service APL numbers, the service providing server 11a adds a memory usage stored in the change request, to the memory usage for the service APL indicated by each service APL number. When the main number is not stored as the service APL number, the service providing server 11a adds an increase amount of memory and an amount of individual memory change stored in the change request, to the memory usage of the service APL indicated by each service APL number.

Accordingly, when an addition is made to the memory usage of the service APL as the main, the service providing server 11a stores the percentage of adding the memory usage for another service APL. The service providing server 11a adds the memory usage informed from the resource allocation control server 14, to the memory usage of the main service APL. The service providing server 11a adds a value obtained by multiplying the stored percentage with the increase amount of memory informed from the resource allocation control server 14, to another service APL. Thus, also when to measure only the load of the main service APL, the service providing server 11a can allocate an adequate amount of memory to each service APL.

### (2) About Load

In the above-described first to third embodiments, the CPU utilization and the memory utilization have been measured, as the load at the execution of the service APL. However, the embodiments are not limited to the above. For example, the service providing servers 11 and 11a can use, as load, the CPU utilization, the memory utilization, the number of requests from the user terminal 2, the number of accesses toward the memory unit, the time for a predetermined process, and arbitrary information.

### (3) About Computer Resource

In the above-described first to third embodiments, an addition or suspension is made to the service APL for providing a service, based on the CPU utilization at the execution of the service APL. The resource allocation control server 14 may obtain the number of service APLs to be additionally executed, based on an increase amount of the CPU utilization. For example, the resource allocation control server 14 obtains an increase/decrease amount of the CPU utilization that is obtained by subtracting the last-time measured CPU utilization from the latest CPU utilization, and obtains the number of service APLs to be additionally executed based on the obtained increase/decrease amount. The resource allocation control server 14 may inform the service providing server 11 to additionally execute the obtained amount of service APLs.

When to calculate the number of service APLs to be additionally executed, another information may be considered. For example, the resource allocation control server 14 may obtain the number of service APLs to be additionally executed, in accordance with an adequate policy in the information processing system 1, in consideration of arbitrary information, such as the average CPU utilization or residual resource at the execution of the service APL. When the number of service APLs to be additionally executed is obtained, based on the increase/decrease amount of the CPU utilization, the resource allocation control server 14 can avoid a negative effect that the service to be provided to the user terminal 2 stops due to congestion.

In the above-described embodiments, an addition or suspension is made to the service APL for providing a service, based on the CPU utilization at the execution of the service APL. However, the embodiments are not limited to the above. For example, when a service APL is operated on a virtual machine in association with the type of service to be provided to the user terminal 2, the service providing server 11 may change the number of virtual machines for the execution, based on the CPU utilization.

For example, the service providing server 11 measures the CPU utilization on the virtual machine to execute the service APL. The resource allocation control server 14 obtains the number of virtual machines to be additionally executed, based on the increase/decrease of the CPU utilization measured by the service providing server 11. The service providing server 11 additionally executes the number of virtual machines that has been obtained by the resource allocation control server 14. In this manner, when a change is made to the number of virtual machines to be additionally executed based on the increase/decrease amount of the CPU utilization, the resource allocation control server 14 can avoid a negative effect that the service to be provided to the user terminal 2 stops due to congestion.

### (4) About Increase/Decrease Amount

In the above-described first to third embodiments, the descriptions have been made to the example in which the increase has been made to the computer resource to be allocated to the service APL. The embodiments are not limited to the above. A reduction may be made to the computer resource in accordance with the load, through the same processes. That is, when the load is reduced, and when the increase/decrease amount of the load becomes a negative value, the number of service APLs to be additionally executed and the value of the memory usage to be added become negative values as well. As a result, by the execution of the above-described processes, the resource allocation control servers 14 and 14a can obtain the number of services APLs to be stopped or the memory usage to be reduced, when the load has decreased.

Negative values can be stored as an increase/decrease number of the APLs and an increase/decrease amount of memory in the change request for instructing the number of APLs to be stopped or the memory usage. Therefore, when the increase/decrease number of the APLs stored in the change request is a negative value, the service providing server 11 stops the service APL, and when the increase/decrease amount of memory is a negative value, the service providing server 11 reduces the memory usage.

### (5) Program

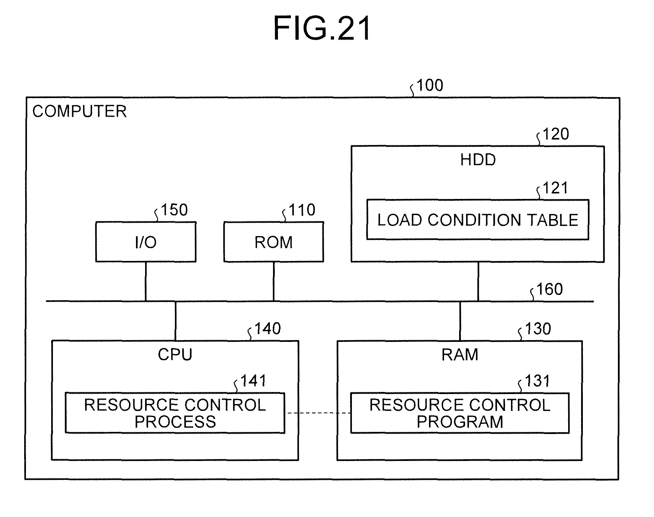

The descriptions have been made to the case in which the resource allocation control server 14 according to the first embodiment realizes various processes using the hardware. However, the embodiments are not limited to the above, and may be realized by controlling a computer to execute a prepared program. Descriptions will hereinafter be made to an example of the computer that executes the program having the same functions as those of the resource allocation control server 14 explained in the first embodiment, using FIG. 21. FIG. 21 is a diagram for explaining the computer to execute a resource control program.

A computer 100 illustrated in FIG. 21 has ROM (Read Only Memory) 110, an HDD (Hard Disk Drive) 120, RAM (Random Access Memory) 130, and a CPU (Central Processing Unit) 140, which are connected to each other through a bus 160 thereinside. The computer 100 illustrated in FIG. 12 has an I/O (Input Output) 150 for sending/receiving packets.

The HDD 120 stores a load condition table 121 as the same information as the load condition table 41 stored by the memory unit 40 illustrated in FIG. 9. A resource control program 131 is stored in the RAM 130 in advance. The CPU 140 reads and executes the resource control program 131 from the RAM 130, thereby the resource control program 131 functions as a resource control process 141, in the example illustrated in FIG. 21. The resource control process 141 has the same functions as those of the load condition collecting unit 43, the resource increase/decrease determining unit 44, and the resource increase/decrease amount deciding unit 45 which are illustrated in FIG. 9.

The resource control program described in the embodiments can be realized by controlling a computer (personal computer or workstation) to execute the prepared program. This program can be distributed through a network, such as the Internet. This program is recorded on a computer readable recording medium, such as a hard disk, a flexible disk (FD), a CD-ROM (Compact Disc Read Only Memory), an MO (Magneto Optical Disc), or a DVD (Digital Versatile Disc). This program can be executed by computer reading from the recording medium.

In one aspect, the computer resource can be made to follow the load of the application in a short time.

## Claims

1. A control device comprising:
a collecting unit (43; 43a) that collects load information representing load at execution of an application from an information processing device which executes the application;
a determining unit (44) that determines whether or not the load represented in the load information collected by the collecting unit exceeds a predetermined threshold value;
a deciding unit (45; 45a) that obtains an increase/decrease amount of the load at the execution of the application using the load information collected by the collecting unit and load information collected in past by the collecting unit, and decides an amount of resource to be allocated at the execution of the application based on the obtained increase/decrease amount, when the determining unit determines that the load exceeds the predetermined threshold value; and
an allocation unit that allocates the amount of resource decided by the deciding unit to the application.

2. The control device according to claim 1, wherein
the collecting unit (43; 43a) collects load information representing a memory utilization by the application;
the deciding unit (45; 45a) obtains a value by multiplying an amount of memory allocated to the application and a predetermined value with a value obtained by subtracting the memory utilization represented in the load information collected by the collecting unit last time from the memory utilization represented in the load information collected by the collecting unit, and
the allocation unit adds the value obtained by the deciding unit to the amount of memory allocated to the application.

3. The control device according to claim 1, wherein
the collecting unit (43; 43a) collects load information representing a memory utilization by the application,
the deciding unit (45; 45a) obtains a value obtained by multiplying the amount of memory allocated to the application and a predetermined value with a value obtained by subtracting a lowest memory utilization among memory utilization indicated in the load information collected in past by the collecting unit from the memory utilization represented in the load information collected by the collecting unit, and
the allocation unit adds the value obtained by the deciding unit to the amount of memory allocated to the application.

4. The control device according to claim 2 or 3 wherein
the collecting unit (43; 43a) collects load information representing a memory utilization by a main application, of a plurality of applications for providing a same service, and
the allocation unit adds the value obtained by the deciding unit to an amount of memory allocated to each of the applications for providing the same service.

5. The control unit according to claim 4, further comprising
a memory unit that stores an additional percentage of an amount of memory for another application, when an addition is made to an amount of memory of the main application, and wherein
the allocation unit adds the value obtained by the deciding unit to the amount of memory for the main application, and adds a value obtained by multiplying the additional percentage stored by the memory unit with the value obtained by the deciding unit, to an amount of memory for an application other than the main application.

6. The control device according to claim 1, wherein
the collecting unit (43; 43a) collects CPU utilization at execution of the application,
the deciding unit (45; 45a) obtains an increase/decrease amount of the CPU utilization using the CPU utilization collected by the collecting unit and a CPU utilization collected by the collecting unit last time, and obtains number of applications to be added and executed by the information processing device, based on the obtained increase/decrease amount, and
the allocation unit adds and controls the information processing device to execute the number of applications obtained by the deciding unit.

7. The control device according to claim 1, wherein
the collecting unit (43; 43a) collects CPU utilization at execution of the application, from the information processing device operating a virtual machine for executing the application,
the deciding unit (45; 45a) obtains an increase/decrease amount of the CPU utilization using the CPU utilization collected by the collecting unit and a CPU utilization collected by the collecting unit last time, and obtains number of virtual machines to be added based on the obtained increase/decrease amount, and
the allocation unit adds and controls the information processing device to operate the number of virtual machines decided by the deciding unit.

8. A resource control program causing a computer to execute a process comprising:
collecting load information representing load at execution of application from an information processing device which executes the application;
determining whether or not the load represented in the collected load information exceeds a predetermined threshold value; and
when determined that the load exceeds the predetermined threshold value, obtaining an increase/decrease amount of the load at the execution of the application using the collected load information and load information collected in past, and deciding an amount of resource to be allocated to the application based on the obtained increase/decrease amount.

9. A resource control method performed by a control device which controls an amount of resource to be allocated to an application, the method comprising:
collecting load information representing load at execution of the application from an information processing device which executes the application;
determining whether or not the load represented in the collected load information exceeds a predetermined threshold value; and
when determined that the load exceeds the predetermined threshold value, obtaining an increase/decrease amount of the load at the execution of the application using the collected load information and load information collected in past, and deciding an amount of resource to be allocated to the application based on the obtained increase/decrease amount.
